# EUROPEAN PATENT APPLICATION

(11) **EP 2 149 959 A2**
(43) Date of publication of application: **03.02.2010**
(21) Application number: 09251894.3
(22) Date of filing: 28.07.2009
(51) Int. Cl.: H02J 7/00

(54) **Battery charging apparatus**

(30) Priority: 30.07.2008 JP 2008196573
(71) Applicant: Kokusan Denki Co., Ltd., Numazu-shi Shizuoka 410-0022 (JP)
(72) Inventor: Yamaguchi, Hirofumi, Numazu-shi Shizuoka 410-0022 (JP); Kimura, Kenji, Numazu-shi Shizuoka 410-0022 (JP); Muramatsu, Shuichi, Numazu-shi Shizuoka 410-0022 (JP); Saito, Hiromitsu, Numazu-shi Shizuoka 410-0022 (JP)
(74) Representative: Wilson Gunn

(57) **Abstract**

A battery charging apparatus includes a controlled rectifier circuit (3) for rectifying an output of a magneto AC generator (1) and supplying a rectified output to a battery (2). The controlled rectifier circuit (3) includes thyristors (Thx, Thy) as rectifying elements, and components of the controlled rectifier circuit (3) are mounted on a circuit board. The charging apparatus includes a protection circuit (5) which has a sensor detecting a temperature of the circuit board and inhibits a trigger signal from being supplied to thyristors (Thx, Thy) of said rectifier circuit (3) when a temperature detected by said sensor is equal to or higher than a predetermined value.

## Description

### TECHNICAL FIELD OF THE INVENTION

The present invention relates to a charging apparatus for charging a battery by a rectified output from an AC generator driven by a prime mover such as an internal combustion engine.

### PRIOR ART OF THE INVENTION

It is disclosed in Japanese Utility Model Application Examined Publication No. 1-40288 a battery charging apparatus for charging a battery with an output from a magneto generator driven by a prime mover such as an internal combustion engine or the like. The battery charging apparatus shown in Japanese Utility Model Application Examined Publication No. 1-40288 comprises: a bridge-type controlled rectifier circuit in which a rectifying device constructing each upper branch or each lower branch of the bridge-type controlled rectifier circuit consists of a thyristor; and a thyristor control circuit which controls supply of trigger signals to the thyristors of the controlled rectifier circuit according to a terminal voltage of the battery. Components of the controlled rectifier circuit are mounted to a circuit board.

In this type of the battery charging apparatus, when the terminal voltage of the battery is equal to or less that a predetermined value, trigger signals are given to the thyristors to supply a charging current from the controlled rectifier circuit to the battery, and the supply of the trigger signals to the thyristor is stopped when the terminal voltage exceeds the predetermined value to stop supplying rectified output from the controlled rectifier circuit to the battery, and thus stopping the supply of the charging current to the battery.

In the above battery charging apparatus, when the prime mover is operated, the supply of the charging current to the battery is repeated, and heat is generated from rectifying elements of the controlled rectifier circuit while the charging current is supplied to the battery. Therefore, temperature rise of the circuit board, to which the rectifying elements constituting the controlled rectifier circuit are mounted, is not avoidable. Especially, when the battery is charged by an output from an AC generator being mounted to an engine for driving a vehicle, the temperature of the controlled rectifier circuit increases since the charging current is continuously supplied to the battery while the engine is operated, and if ambient temperature is high, the temperature of the circuit board excessively increases, which may cause the rectifying elements or other electronic components which are mounted to the circuit board to be damaged.

### SUMMARY OF THE INVENTION

Therefore, an object of the present invention is to provide a battery charging apparatus which can eliminate a possibility that temperature of a circuit board, to which rectifying elements of a controlled rectifier circuit is mounted, excessively increases.

The present invention is applied to a battery charging apparatus comprising AC input terminals to be connected to output terminals of a magneto AC generator, a bridge-type controlled rectifier circuit having DC output terminals to be connected to output terminals of a battery, and a thyristor control circuit for controlling supply of trigger signals to a thyristor so as to maintain a terminal voltage of the battery within a set range.

In the present invention, the controlled rectifier circuit and the thyristor control circuit are mounted to a circuit board, and a protection circuit is provided for protecting components being mounted to the circuit board. This protection circuit comprises a temperature sensor for detecting a temperature of the circuit board and is constituted so as to inhibit the supply of the trigger signals to the thyristors of the controlled rectifier circuit when the temperature detected by the temperature sensor becomes equal to or more than a predetermined value.

With the above-described protection circuit, when the temperature of the circuit board being mounted to the controlled rectifier circuit becomes equal to or more than the predetermined value, the thyristors of the controlled rectifier circuit can be turned off in order to stop supply of a charging current from the controlled rectifier circuit to the battery. While the supply of the charging current is stopped, since the temperature of the rectifying elements of the controlled rectifier circuit can be decreased by stopping heat generation of the rectifying element, it is avoidable that the components being mounted to the circuit board are damaged by excessive temperature increase of the circuit board to which the controlled rectifier circuit is mounted.

In a preferable embodiment of the present invention, the thyristor control circuit comprises a trigger signal supplying switch circuit which is provided between a positive DC output terminal of the controlled rectifier circuit and gates of the thyristors for supplying trigger signals from the AC generator to the thyristors, and a switch control circuit for detecting the terminal voltage of the battery and controlling the trigger signal supplying switch circuit so that the trigger signal supplying switch circuit is turned on when the detected terminal voltage is equal to or less than a predetermined value and is turned off when the detected terminal voltage exceeds the predetermined value. In this case, it is used as a temperature sensor which includes an output switch being turned off when a detected temperature is less than the predetermined value and turned on when the detected temperature is equal to or more than the predetermined value. The protection circuit is constituted so as to allow the trigger signal supplying switch to be in an ON state when the output switch of the temperature sensor is in an OFF state and to prevent the trigger signal supplying switch from becoming an ON state when the output switch of the temperature sensor is turned on.

### BRIEF DESCRIPTION OF THE DRAWINGS

The above and other objects and features of the invention will be apparent from the detailed description of the preferred embodiment of the invention, which is described and illustrated with reference to the accompanying drawing, in which;

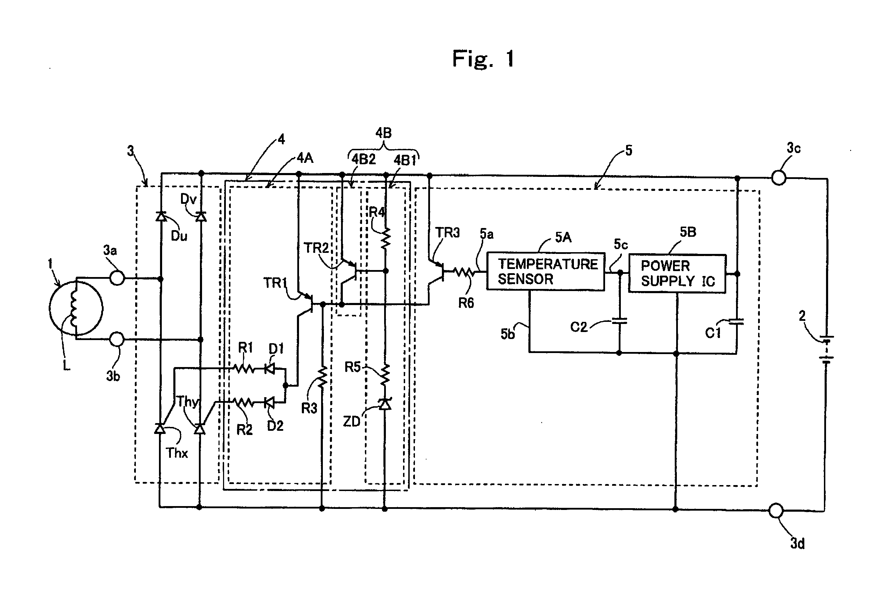

FIG. 1 is a circuit diagram of a battery charging apparatus constructed in accordance with an embodiment of the invention.

### DETAILED DESCRIPTION OF THE PREFERRED EMBODIMENTS

Now, a preferred embodiment of the present invention will be described in detail with reference to the drawing.

In FIG. 1, a reference numeral 1 denotes a magneto AC generator driven by an engine, and 2 denotes a battery. A reference numeral 3 denotes a controlled rectifier circuit, 4 denotes a thyristor control circuit, and 5 denotes a protection circuit. Components of the controlled rectifier circuit 3, the thyristor control circuit 4 and the protection circuit 5 are mounted to a common circuit board.

The magneto AC generator 1 comprises a magnet rotor being mounted to a rotational axis of the engine and a stator being secured to a case or a cover of the engine. The stator includes a core having magnetic pole portions opposed to magnetic poles of the rotor and an armature coil L wound around the core. The stator generates an AC voltage from the armature coil L in synchronism with rotation of the engine.

The controlled rectifier circuit 3 consists of a mixed bridge-type rectifier circuit using a thyristor as a rectifier element constituting each upper or lower branch of a bridge circuit. In the shown controlled rectifier circuit 3, the upper branches of the bridge circuit consist of diodes Du, Dv, cathodes of which are commonly connected, and the lower branches of the bridge circuit consist of thyristors Thx, Thy, anodes of which are commonly connected and cathodes of which are connected to the anodes of the diodes Du, Dv, respectively.

In the shown controlled rectifier circuit 3, a connecting point between the anode of the diode Du and the cathode of the thyristor Thx and a connecting point between the anode of the diode Dv and the cathode of the thyristor Thy are AC input terminals 3a and 3b, respectively, and an output voltage of the generator 1 is applied across the AC input terminals 3a and 3b.

Also, in the shown controlled rectifier circuit 3, a common connection point of the cathodes of the diodes Du and Dv and a common connection point of the anodes of the thyristors Thx and Thy are a positive DC output terminal 3c and a negative DC output terminal 3d, respectively, and the battery 2 is connected across these DC output terminals 3c and 3d.

The thyristor controlled circuit 4 consists of a trigger signal supplying switch circuit 4A being provided between the positive DC output terminal 3c of the controlled rectifier circuit and the gates of the thyristors Thx and Thy, and a switch control circuit 4B which controls the trigger signal supplying switch circuit 4A so that the trigger signal supplying switch circuit 4A is turned on when the detected voltage is equal to or less than a predetermined value and is turned off when the detected voltage exceeds the predetermined value. Trigger signals are supplied from the AC generator 1 to the gates of the thyristors Thx and Thy when the trigger signal supplying switch circuit 4A is in the ON state, and the supply of the trigger signals to the gates of the thyristors Thx and Thy is stopped when the trigger signal supplying switch circuit 4A is in an OFF state.

In the illustrated example, a voltage detection circuit 4B1 and an on-off control circuit 4B2 constitutes the switch control circuit 4B. The voltage detection circuit 4B1 detects whether a voltage across the battery 2 is the predetermined value. The on-off control circuit 4B2 controls the trigger signal supplying switch circuit 4A so as to turn on the trigger signal supplying switch circuit 4A when it is detected by the voltage detection circuit 4B1 that the voltage across the battery is equal to or less than the predetermined value and to turn off the trigger signal supplying switch circuit 4A when t is detected by the voltage detection circuit 4B1 that the voltage across the battery exceeds the predetermined value.

The shown trigger signal supplying switch circuit 4A consists of a PNP transistor TR1 in which an emitter is connected to the positive DC output terminal 3c of the controlled rectifier circuit 3, diodes D1 and D2 in which anodes are connected to a collector of a transistor TR1, a resistor R1 connected between the cathode of the diode D1 and the gate of the thyristor Thx, a resistor R2 connected between the cathode of the diode D2 and the gate of the thyristor Thy, and a resistor R3 connected between a base of the transistor TR1 and the negative DC output terminal 3d.

The trigger signal supplying switch circuit 4A is turned on when a base current flows from the battery 2 through the emitter and the base of the transistor TR1 and the resistor R3, and the transistor TR1 becomes conductive state. When the trigger signal supplying switch circuit 4A is in an ON state, in a half-cycle of an induced voltage of the armature coil L, a trigger signal is supplied to the thyristor Thy from the armature coil L through the terminal 3a, the diode Du, the transistor TR1, the diode D2, the resistor R2, the junction between the gate and cathode of the thyristor Thy, and the terminal 3b. In another half-cycle of the induced voltage of the armature coil L, a trigger signal is supplied to the thyristor Thx from the armature coil L through the diode Dv, the transistor TR1, the diode D1, the resistor R1, and a junction between gate and cathode of the thyristor Thx.

The voltage detection circuit 4B1 consists of a resistor R4, an end of which is connected to the positive DC output terminal 3c of the controlled rectifier circuit 3, a resistor R5 one end of which is connected to the other end of the resistor R4, and a Zener diode ZD having a cathode connected to the other end of the resistor R5 and an anode connected to the negative DC terminal 3d of the controlled rectifier circuit.

Also, the on-off control circuit 4B2 comprises a PNP transistor TR2 having an emitter connected to the positive DC terminal 3c, a corrector connected to the base of the transistor TR1, and a base connected to a connecting point between the resistor 4 and the resistor 5 of the voltage detection circuit 4B1.

The protection circuit 5 comprises a temperature sensor 5A for detected temperature of the circuit board to which the controlled rectifier circuit 3 is mounted, a power supply IC (integrated circuit) 5B for supplying a constant and stabilized power source voltage to the temperature sensor 5A, and a transistor TR3 to be used as a switch for performing on-off control of the trigger signal supplying switch circuit 4A. The protection circuit 5 forcibly turns off the trigger signal supplying switch circuit 4A when the temperature detected by the temperature sensor 5A becomes equal to or more than a predetermined value, in order to prevent the trigger signals from being supplied to the thyristors Thx and Thy of the controlled rectifier circuit 3.

The transistor TR3 is a PNP transistor, an emitter of which is connected to the positive DC output terminal, and a collector of which is connected to the base of the transistor TR1. The shown temperature sensor 5A has an output switch on its output stage. The output switch maintains an OFF state when the detected temperature is less than the predetermined value, and becomes ON state when the detected temperature is equal to or more than the predetermined value. The temperature sensor 5A has output terminals 5a and 5b connected to one end and the other end of said output switch, respectively. The output terminal 5a is connected to the transistor TR3 through a resistor R6, and the output terminal 5b is connected to the negative DC output terminal 3d.

The temperature sensor 5A is mounted to the circuit board in which components of the charging apparatus including the diodes and thyristors of the controlled rectifier circuit 3 are mounted. The temperature sensor 5A is thermally coupled to the circuit board so as to detect temperature of the circuit board. In this embodiment, the temperature sensor 5A consists of an IC (integral circuit) which is constituted as a chip component, and the IC is soldered to a land being provided on the circuit board to which the components of the controlled rectifier circuit 3 is mounted.

The power supply IC 5B is an IC operating as a three-terminal regulator and constitutes a constant voltage power supply circuit together with external capacitors C1 and C2. The constant voltage power supply circuit steps down the voltage across the battery 2 and applies a constant DC voltage (5V) to a power supply terminal 5c of the IC constituting the temperature sensor.

In the battery charging apparatus according to this embodiment, when the voltage across the battery 2 is equal to or less than the predetermined value, the output of the AC generator 1 is rectified by the controlled rectifier circuit 3 and is supplied to the battery, and thus charging the battery 2.

In the above-described charging apparatus, it is assumed that the temperature of the circuit board is less than the predetermined value and that the voltage across the battery 2 is equal to or less than the predetermined value. In this case, since the output switch of the temperature sensor 5A is in OFF state, the transistor TR3 is in OFF state. Also, when the voltage across the battery 2 is equal to or less than the predetermined value, the Zener diode ZD is in OFF state, and the voltage detection circuit 4B1 detects that the battery voltage is equal to or less than the predetermined value. At this time, since the base current does not flow into the transistor TR2, the transistor is in OFF state. In this situation, since the base current flows from the battery to the transistor TR1 through the resistor R3 and the junction between the emitter and base of the transistor TR1, the transistor TR1 is turned on (the trigger signal supplying switch circuit 4A is turned on), and the trigger signals are supplied from the AC generator 1 to the thyristor Thx or Thy. In the thyristors Thx and Thy, one thyristor, to which the trigger signal is supplied, is turned on, and the charging current is supplied from the AC generator 1 to the battery 2 through the controlled rectifier circuit 2. When the charging of the battery progresses, and the voltage across the battery 2 exceeds the predetermined value, the Zener diode ZD is turned on, and the voltage detection circuit 4B1 detects that the battery voltage exceeds the predetermined value. At this point, the base current is supplied to the transistor TR2 to turn on the transistor. When the transistor TR2 is turned on, since the junction between the collector and the base of the transistor TR1 is short-circuited, the supply of the base current to the transistor TR1 stops, and the transistor TR1 is turned off (the trigger signal supplying switch circuit 4A is turned off). Thus, the supply of the trigger signals to the thyristors Thx and Thy stops, and the thyristors Thx and Thy cannot be turned on, which cause the charging of the battery 2 to be stopped.

When the voltage across the battery 2 becomes equal to or less than the predetermined value after the charging of the battery 2 is stopped, the Zener diode ZD is turned off (it is detected that the battery voltage becomes equal to or less than the predetermined value), and the transistor TR2 is turned off. Therefore, the trigger signals are supplied again to the thyristors Thx and Thy, and thus charging of the battery 2 is restarted. By repeatedly performing the above operation, the voltage across the battery 2 is maintained around the predetermined value.

When the temperature of the circuit board is increased by heat from semiconductor elements constituting the controlled rectifier circuit 3, and the temperature becomes equal to or more than the predetermined value, the output switch in the temperature sensor 5A is turned on. Thus, current flows from the battery 2 through the junction between the emitter and the base of the transistor TR3, the resistor R6 and the output switch in the temperature sensor 5A, and the transistor TR3 is turned on. When the transistor TR3 is turned on, the transistor TR1 becomes an OFF state since the base current does not flow into the transistor TR1, and thus the supply of the trigger signals to the thyristors Thx and Thy is stopped. Therefore, charging of the battery stops, current stops flowing to the diodes and the thyristors of the controlled rectifier circuit 3, and heat generation from the diodes and the thyristors stops, which cause the temperature of the circuit board to decrease. Since the output switch in the temperature sensor 5A becomes an OFF state when the temperature of the circuit board becomes less than the predetermined value, the transistor TR3 becomes an OFF state, which leads the battery charging apparatus to back in a normal state.

In the above embodiment, although the lower branch of the bridge of the controlled rectifier circuit 3 is constituted by the thyristors, and the upper branches of the bridge of the controlled rectifier circuit 3 are constituted by the diodes, the present invention may be applied to a case in which the lower branches of the bridge are constituted by the diodes, and the upper branches of the bridge are constituted by the thyristors, or a case in which both upper and lower branches of the bridge are constituted by thyristors.

Although the temperature sensor which includes the output switch is used in the above embodiment, a sensor which generates an analog output in proportional to the detected temperature may be used as the temperature sensor. In this case, the protection circuit 5 may be constituted so that the output signal of the temperature sensor is compared to a reference signal which determines a predetermined temperature and that the trigger signal supplying switch circuit 4 is turned off when the magnitude of the output signal of the temperature sensor becomes equal to or more than the magnitude of the reference signal.

In the above embodiment, although the trigger signal supplying switch circuit 4A is turned off by providing the transistor TR3 in the protection circuit 5 and turning on the transistor TR3 when the temperature detected by the temperature sensor becomes equal to or more than the predetermined value, it is only necessary for the protection circuit 5 to prohibit the supply of the trigger signals to the thyristors of the controlled rectifier circuit 3 when the temperature detected by the temperature sensor becomes equal to or more than the predetermined value, and the construction of the protection circuit 5 is not limited to the above-described embodiment..

For example, in the above embodiment, the trigger signal supplying switch circuit 4 may be turned off by omitting the transistor TR3, connecting the output terminal 5a of the temperature sensor 5A to the base of the transistor TR2 through the resistor R6, and flowing the base current to the transistor TR2 through the junction between the emitter and the base of the transistor TR2, the resistor R6 and the temperature sensor 5A when the temperature detected by the temperature sensor becomes equal to or more than the predetermined value, and the output switch of the temperature sensor becomes an ON state, in order to turn on the transistor TR2.

In the above embodiment, the magneto AC generator includes single-phase armature coils; however, the present invention can be applied also to a magneto AC generator having three-phase armature coils. In case that the generator includes the three-phase armature coils, it is used a three-phase bridge-type controlled rectifier circuit in which rectifier elements for constituting at least one of three upper branches or three lower branches of the bridge-type rectifier circuit consist of thyristors.

## Claims

1. A battery charging apparatus comprising a bridge type controlled rectifier circuit (3) which includes thyristors (Thx, Thy) as rectifying elements and has AC input terminals (3a, 3b) to be connected to output terminals of a magneto AC generator (1) and DC output terminals (3c, 3d) to be connected to output terminals of a battery (2); and a thyristor control circuit (4) which controls supply of trigger signals to said thyristors (Thx, Thy) so as to maintain a terminal voltage of said battery (2) within a set range; wherein,
said controlled rectifier circuit (3) and said thyristor control circuit (4) are mounted on a circuit board,
a protection circuit (5) is provided to protect components mounted on said circuit board, and
said protection circuit (5) comprises a temperature sensor detecting a temperature of the circuit board and is constructed so as to inhibit a trigger signal from being supplied to the thyristors (Thx, Thy) of said rectifier circuit (3) when a temperature detected by said sensor is equal to or higher than a predetermined value.

2. A battery charging apparatus according to claim 1, wherein,
said thyristor control circuit (4) comprises a trigger signal supplying switch circuit (4A) provided between a positive DC output terminal and gates of said thyristors (Thx, Thy); and a switch control circuit (4B) which detects a voltage across the battery and controls said trigger signal supplying switch circuit (4A) according to the detected voltage so that the trigger signal supplying switch circuit (4A) is turned ON when the detected voltage is equal to or lower than a predetermined value and is turned OFF when the detected voltage exceeds the predetermined value,
said temperature sensor includes an output switch which holds an OFF state when a detected temperature is below a predetermined value and is turned ON when the detected temperature is equal to or higher than the predetermined value, and
said protection circuit is constructed so as to allow said trigger signal supplying switch to be turned ON when said output switch is in an OFF state, and said trigger signal supplying switch is prevented to be turned ON when said output switch is in an ON state.
